# EUROPÄISCHE PATENTANMELDUNG

(11) **EP 2 166 240 A1**
(43) Veröffentlichungstag der Anmeldung: **24.03.2010**
(21) Anmeldenummer: 09011407.5
(22) Anmeldetag: 05.09.2009
(51) Int. Cl.: F16C 11/06

(54) **Vorrichtung bestehend aus mindestens einem ersten und einem zweiten Maschinenteil sowie einem Dichtungsbalg zwischen den beiden Maschinenteilen**

(30) Priorität: 18.09.2008 DE 202008012454 U
(71) Anmelder: MVS Dynalink Europe GmbH, 65835 Liederbach (DE)
(72) Erfinder: Georg, Alexander, 65366 Geisenheim (DE)
(74) Vertreter: Gosdin, Michael

(57) **Zusammenfassung**

Die Erfindung betrifft eine Vorrichtung bestehend aus mindestens einem ersten (1) und einem zweiten (2) Maschinenteil, wobei die Maschinenteile (1, 2) relativ zueinander beweglich, insbesondere schwenkbar, sind, wobei zur Abdichtung eines ersten Maschinenteils (1) gegen das zweite Maschinenteil (2) ein Dichtungsbalg (3) angeordnet ist, wobei der Dichtungsbalg (3) eine erste Ringnut (4) aufweist, in der ein erstes Federelement (5) eingebracht ist, mit der der Dichtungsbalg (3) im Bereich der ersten Ringnut (4) an das erste Maschinenteil (1) gedrückt wird, und/oder wobei der Dichtungsbalg (3) eine zweite Ringnut (6) aufweist, in der ein zweites Federelement (7) eingebracht ist, mit der der Dichtungsbalg (3) im Bereich der zweiten Ringnut (6) an das zweite Maschinenteil (2) gedrückt wird. Um die Montage des Dichtungsbalgs zu vereinfachen und zu stabilisieren und eine gleichmäßige Andruckkraft des Federelements zu erreichen, sieht die Erfindung vor, dass das erste Maschinenteil (1) eine Gleitlagerschale umfasst und das zweite Maschinenteil (2) eine an einer Achse angeordnete Kugel umfasst, die in der Gleitlagerschale gelagert ist, wobei das durch die Gleitlagerschale und Kugel gebildete Kugelgelenk Bestandteil einer Pendelstütze eines Kraftfahrzeugs ist und wobei das erste und/oder das zweite Federelement (5, 7) als geschlossener Ring ausgebildet ist, wobei der Ring aus einem wendelförmig gebogenen Federdraht besteht.

## Beschreibung

Die Erfindung betrifft eine Vorrichtung bestehend aus mindestens einem ersten und einem zweiten Maschinenteil, wobei die Maschinenteile relativ zueinander beweglich, insbesondere schwenkbar, sind, wobei zur Abdichtung eines ersten Maschinenteils gegen das zweite Maschinenteil ein Dichtungsbalg angeordnet ist, wobei der Dichtungsbalg eine erste Ringnut aufweist, in der ein erstes Federelement eingebracht ist, mit der der Dichtungsbalg im Bereich der ersten Ringnut an das erste Maschinenteil gedrückt wird, und/oder wobei der Dichtungsbalg eine zweite Ringnut aufweist, in der ein zweites Federelement eingebracht ist, mit der der Dichtungsbalg im Bereich der zweiten Ringnut an das zweite Maschinenteil gedrückt wird.

Vorrichtungen dieser Art werden benötigt, um beispielsweise in Fahrzeug-Radaufhängungen zwei Teile, die im Betrieb gewisse Bewegungen ausführen, relativ zueinander festzulegen. Derartige Befestigungselemente werden auch als Koppelstangen, Pendelstützen oder Stabilisatorstreben bezeichnet. Sie sorgen dafür, dass Kräfte und Wege übertragen werden. In Kraftfahrzeugen verbinden sie beispielsweise den Stabilisator an der Vorderachse mit dem Achslenker, wobei Kräfte beim Ein- und Ausfedern des Rades übertragen werden und somit das Fahrverhalten des Fahrzeugs bei Fahrbahnunebenheiten stabilisiert wird.

Dabei weisen die beiden miteinander verbundenen Maschinenteile zumeist ein Kugelgelenk auf, bei dem eine Kugel, die am Ende einer Achse angeordnet ist, in einer Gleitlagerschale angeordnet ist. Für eine lange Lebensdauer des Kugelgelenks muss dieses insbesondere vor dem Eindringen von Verunreinigungen und Feuchtigkeit geschützt werden. Es ist daher bekannt, einen Dichtungsbalg zu montieren, der mit seinen axialen Enden an dem Gehäuse der Lagerschale bzw. an der die Kugel tragenden Achse statisch festgelegt ist.

Die statische Festlegung des Dichtungsbalgs erfolgt dabei durch zwei Federelemente, die in Ringnuten im Dichtungsbalg eingebracht sind und so den Dichtungsbalg an diesen Stellen am Gehäuse der Lagerschale bzw. an der die Kugel tragenden Achse fixieren.

Als Federelemente werden an einer Umfangsstelle geschlitzte Federringe verwendet, die sich in der Ringnut um deutlich mehr als 360° erstrecken, um einen festen Verbund zwischen Dichtungsbalg und Maschinenteil herzustellen. Im montierten Zustand erstreckt sich der Federring um fast 720°, d. h. um fast zwei Umdrehungen. Nur so kann der Federring - in der Ringnut des Dichtungsbalgs angeordnet - eine hinreichende Andruckkraft auf den Dichtungsbalg ausüben, so dass dieser dicht am Maschinenteil anliegt.

Nachteilig ist dabei, dass die automatische Montage des Federrings relativ schwierig ist. Es kommt oft vor, dass die beiden Windungen des Federrings nach der Montage nicht nebeneinander liegen, sondern sich überkreuzen.

Dann muss durch manuelle Nacharbeit der Federring in die richtige Lage gebracht werden.

Ferner ist es nachteilig, dass der Federring systembedingt nicht über den gesamten Umfang der Ringnut des Dichtungsbalgs, in der er montiert ist, eine gleichmäßige radiale Andruckkraft erzeugt. Durch die offenen Enden des Federrings kommt es zu einem ungleichmäßigen Andrücken des Dichtungsbalgs und damit zu einer nicht immer optimalen statischen Abdichtung des Dichtungsbalgs am Maschinenteil.

Der Erfindung liegt daher die **Aufgabe** zugrunde, eine Vorrichtung der eingangs genannten Art so fortzubilden, dass zum einen die Montage des Dichtungsbalgs an den zusammenwirkenden Maschinenteilen vereinfacht und stabilisiert werden kann und dass zum anderen über den Umfang der Anlage des Dichtungsbalgs am Maschinenteil eine optimal gleichmäßige Andruckkraft vom Federelement ausgeübt wird.

Die **Lösung** dieser Aufgabe durch die Erfindung ist **dadurch gekennzeichnet, dass** das erste Maschinenteil eine Gleitlagerschale umfasst und das zweite Maschinenteil eine an einer Achse angeordnete Kugel umfasst, die in der Gleitlagerschale gelagert ist, wobei das durch die Gleitlagerschale und Kugel gebildete Kugelgelenk Bestandteil einer Pendelstütze eines Kraftfahrzeugs ist und wobei das erste und/oder das zweite Federelement als geschlossener Ring ausgebildet ist, wobei der Ring aus einem wendelförmig gebogenen Federdraht besteht.

Die erste und/oder zweite Ringnut kann im Radialschnitt eine der Außenkontur des wendelförmig gebogenen Federdrahts entsprechende Form aufweisen. Insbesondere kann vorgesehen werden, dass die erste und/oder zweite Ringnut im Radialschnitt eine halbkreisförmige Kontur aufweist.

Der Federdraht besteht bevorzugt aus nichtrostendem Stahl.

Der Durchmesser des Federdrahts liegt bevorzugt zwischen 0,2 und 0,6 mm. Der Außendurchmesser der wendelförmigen Struktur des Federdrahts liegt zumeist zwischen 1,0 und 4,0 mm, vorzugsweise zwischen 1,4 und 2,3 mm.

Das Federelement wird mit besonderem Vorteil aus einem sich gerade erstreckenden wendelförmig gebogenen Federdraht gebildet, wobei die beiden axialen Enden des wendelförmig gebogenen Federdrahts miteinander verbunden sind.

Der sich gerade erstreckende wendelförmig gebogene Federdraht kann an seinem einen axialen Ende einen Abschnitt aufweisen, in dem der Außendurchmesser der wendelförmigen Struktur des Federdrahts einen gegenüber dem restlichen Bereich der wendelförmigen Struktur des Federdrahts reduzierten Durchmesser aufweist.

Damit ist es in vorteilhafter Weise möglich, dass gemäß einer weiteren Ausgestaltung der Erfindung der Abschnitt mit reduziertem Durchmesser in das andere axiale Ende des wendelförmig gebogenen Federdrahts eingeschraubt ist.

Der Dichtungsbalg besteht zumeist aus Gummi. Er kann aber auch beispielsweise aus Kunststoff bestehen, insbesondere aus einem Thermoplastischen Elastomer auf Urethanbasis (TPU).

Mit der vorgeschlagenen Ausgestaltung des Federelements ist es möglich, den Montageprozess der Federelemente einfacher und stabiler zu gestalten, so dass die bislang erforderlichen Nacharbeiten vermeidbar sind. Demgemäß kann die Vorrichtung in preiswerterer Weise hergestellt werden.

Ein weiterer wesentlicher Vorteil ist, dass über den gesamten Umfang der Ringnut, in der das Federelement angeordnet ist, eine gleichmäßige radiale Andruckkraft erzeugt wird, so dass die statische Abdichtung zwischen Maschinenteil und Dichtungsbalg verbessert ist.

In der Zeichnung ist ein Ausführungsbeispiel der Erfindung dargestellt. Es zeigen:
- Fig. 1: in perspektivischer Darstellung eine Vorrichtung bestehend aus zwei zusammenwirkenden Maschinenteilen, die mittels eines Dichtungsbalgs abgedichtet sind, wobei die Vorrichtung ein Kugelgelenk umfasst,
- Fig. 2: die Vorrichtung nach Fig. 1 in der Seitenansicht,
- Fig. 3: einen Federring zur statischen Fixierung des Dichtungsbalgs in der Draufsicht,
- Fig. 4: den Federring gemäß Fig. 4 vor seiner Fertigstellung als Halbzeug und
- Fig. 5: die Einzelheit "A" gemäß Fig. 4.

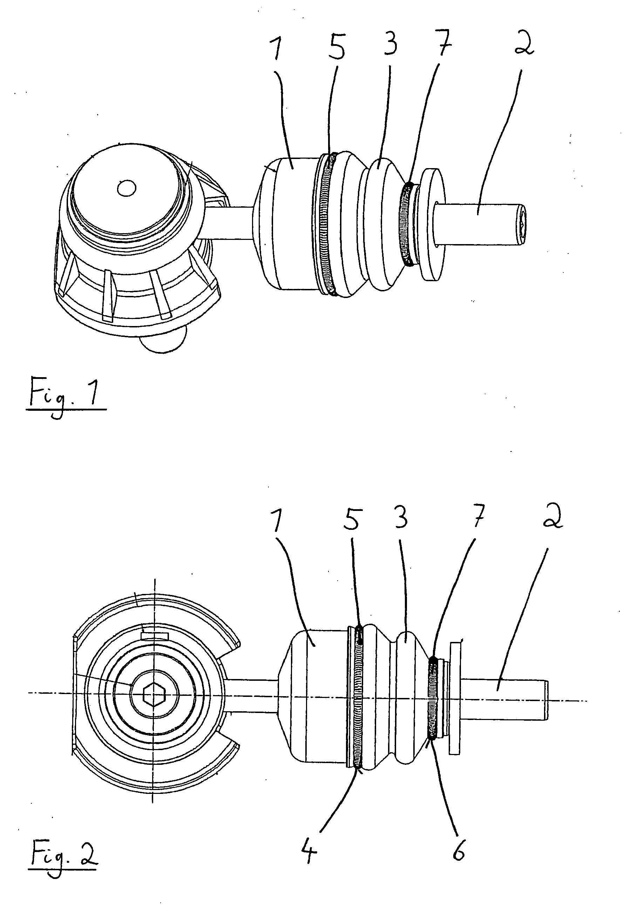

In den Figuren 1 und 2 ist eine Vorrichtung dargestellt, die unter anderem aus zwei Maschinenteilen 1 und 2 besteht. Bei dem Maschinenteil 1 handelt es sich um ein Gehäuse eines Kugelgelenks, in dem eine Gleitlagerschale für eine Kugel angeordnet ist. Das Maschinenteil 2 ist eine Achse, an deren (linken) Ende eine (nicht zu erkennende) Kugel angeordnet ist, die in der Gleitlagerschale angeordnet ist. Das so gebildete Kugelgelenk wird durch einen Dichtungsbalg 3 abgedichtet.

Die Vorrichtung ist vorliegend ein Koppelelement und wird eingesetzt, um zwei (nicht dargestellte) Teile eines Fahrwerks eines Kraftfahrzeugs relativ zueinander festzulegen, um so Wege und Kräfte des einen Fahrwerkteils auf das andere übertragen zu können.

Damit der Dichtungsbalg 3 mit seinen axialen Enden statisch fest an den beiden Maschinenteilen 1 und 2 festliegt, weist er in seinen axialen Endbereichen Ringnuten 4 und 6 auf (s. Fig. 2), nämlich eine erste Ringnut 4 und eine zweite Ringnut 6. In den Ringnuten 4, 6 ist je ein Federelement 5 und 7 montiert, nämlich in der ersten Ringnut 4 ein erstes Federelement 5 und in der zweiten Ringnut 6 ein zweites Federelement 7.

Wesentlich ist, dass zumindest das erste oder das zweite Federelement, vorzugsweise beide Federelemente, als geschlossener Ring ausgebildet sind. Dieser Ring besteht aus einem wendelförmig gebogenen Federdraht.

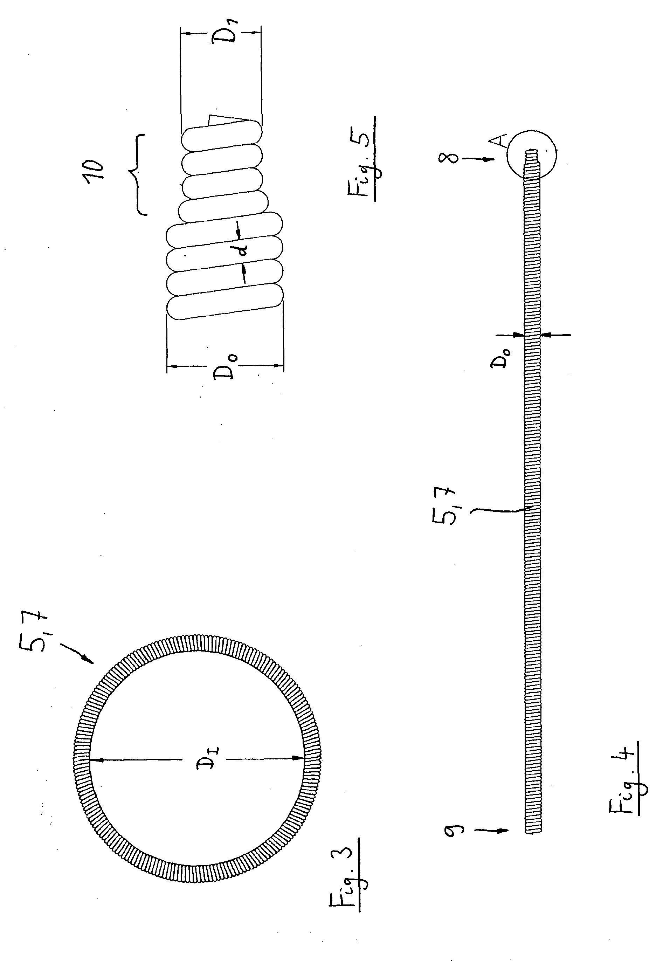

Details hierzu sind in den Figuren 3 bis 5 zu sehen.

In Fig. 3 ist der zur Montage in die Ringnut 4, 6 fertige Federring 5, 7 zu sehen. Er hat eine kreisringförmige Ausgestaltung und besteht aus einem wendelförmig gebogenen Federdraht. Der Innendurchmesser D_{I} des Rings ist im nicht montierten Zustand geringfügig kleiner als der Durchmesser des Nutgrunds der Ringnut 4, 6, so dass nach der Montage vom Federelement 5, 7 eine hinreichende radial nach innen gerichtete Andruckkraft ausgeübt wird. Der Innendurchmesser liegt in Abhängigkeit von dem Dichtungsbalg, an dem das Federelement 5, 7 zu montieren ist, bevorzugt in einem Bereich zwischen ca. 10 mm und 55 mm.

In Fig. 4 ist der wendelförmig gebogene Federdraht als Halbzeug zu sehen, d. h. bevor er zu dem Ring 5, 7 zusammengebaut ist. Das sich hier noch längs erstreckende Halbzeug weist eine feine wendelförmige Struktur auf, die durch einen Draht gebildet wird, der einen Durchmesser d aufweist, der bevorzugt im Bereich zwischen 0,2 und 0,6 mm liegt. Die vorliegende wendelförmige Struktur hat einen Außendurchmesser D₀, der zumeist im Bereich zwischen 1,0 und 4,0 mm liegt.

Um den Federring 5, 7 gemäß Fig. 3 zu bilden, müssen die beiden axialen Enden 8 und 9 des Halbzeugs gemäß Fig. 4 miteinander verbunden werden.

Eine hierfür bevorzugte Lösung besteht darin, dass die wendelförmige Struktur gemäß Fig. 4 an einem axialen Ende 8 in einem Abschnitt 10 mit einem geringeren Außendurchmesser D₁ ausgeführt wird, wie es Fig. 5 zeigt.

Der Außendurchmesser dieses Abschnitts 10 ist dabei so gewählt, dass er in Abhängigkeit des Durchmessers d des Drahts dazu geeignet ist, in das andere axiale Ende 9 des Halbzeugs gemäß Fig. 4 "eingeschraubt" zu werden. Die wendelförmigen Windungen des Abschnitts 10 liegen dann mit ihrem äußeren Umfang am inneren Umfang der wendelförmigen Windungen im Bereich des axialen Endes 9 an, so dass sich ein Formschluss nach Art einer Schraube ergibt.

Beispielsweise kann bei einem Drahtdurchmesser d im Bereich von 0,35 mm und einem Außendurchmesser D₀ der wendelförmigen Struktur von 1,8 mm der reduzierte Außendurchmesser D₁ bei ca. 1,3 mm liegen.

Dieser Herstellungsprozess kann automatisiert werden. Dabei wird vor dem "Einschrauben" des axialen Endes 8 in das axiale Ende 9 das Halbzeug gemäß Fig. 4 zunächst um eine entsprechende Umdrehungszahl gegen die Einschraubbewegung gegengedreht, so dass nach dem Einschrauben ein verwindungsfreies Federelement 5, 7 vorliegt.

### Bezugszeichenliste:

- 1: erstes Maschinenteil
- 2: zweites Maschinenteil
- 3: Dichtungsbalg
- 4: erste Ringnut
- 5: erstes Federelement
- 6: zweite Ringnut
- 7: zweites Federelement
- 8: axiales Ende
- 9: axiales Ende
- 10: Abschnitt mit reduziertem Durchmesser

- D_{I}: Innendurchmesser
- d: Durchmesser des Federdrahts
- D₀: Außendurchmesser der wendelförmigen Struktur
- D₁: reduzierter Außendurchmesser

## Patentansprüche

1. Vorrichtung bestehend aus mindestens einem ersten (1) und einem zweiten (2) Maschinenteil, wobei die Maschinenteile (1, 2) relativ zueinander beweglich, insbesondere schwenkbar, sind, wobei zur Abdichtung eines ersten Maschinenteils (1) gegen das zweite Maschinenteil (2) ein Dichtungsbalg (3) angeordnet ist, wobei der Dichtungsbalg (3) eine erste Ringnut (4) aufweist, in der ein erstes Federelement (5) eingebracht ist, mit der der Dichtungsbalg (3) im Bereich der ersten Ringnut (4) an das erste Maschinenteil (1) gedrückt wird, und/oder wobei der Dichtungsbalg (3) eine zweite Ringnut (6) aufweist, in der ein zweites Federelement (7) eingebracht ist, mit der der Dichtungsbalg (3) im Bereich der zweiten Ringnut (6) an das zweite Maschinenteil (2) gedrückt wird,
**dadurch gekennzeichnet, dass**
dass das erste Maschinenteil (1) eine Gleitlagerschale umfasst und das zweite Maschinenteil (2) eine an einer Achse angeordnete Kugel umfasst, die in der Gleitlagerschale gelagert ist, wobei das durch die Gleitlagerschale und Kugel gebildete Kugelgelenk Bestandteil einer Pendelstütze eines Kraftfahrzeugs ist und wobei das erste und/oder das zweite Federelement (5, 7) als geschlossener Ring ausgebildet ist, wobei der Ring aus einem wendelförmig gebogenen Federdraht besteht.

2. Vorrichtung nach Anspruch 1, **dadurch gekennzeichnet, dass** die erste und/oder zweite Ringnut (4, 6) im Radialschnitt eine der Außenkontur des wendelförmig gebogenen Federdrahts entsprechende Form aufweist.

3. Vorrichtung nach Anspruch 2, **dadurch gekennzeichnet, dass** die erste und/oder zweite Ringnut (4, 6) im Radialschnitt eine halbkreisförmige Kontur aufweist.

4. Vorrichtung nach einem der Ansprüche 1 bis 3, **dadurch gekennzeichnet, dass** der Federdraht aus nichtrostendem Stahl besteht.

5. Vorrichtung nach einem der Ansprüche 1 bis 4, **dadurch gekennzeichnet, dass** der Durchmesser (d) des Federdrahts zwischen 0,2 und 0,6 mm beträgt.

6. Vorrichtung nach einem der Ansprüche 1 bis 5, **dadurch gekennzeichnet, dass** der Außendurchmesser (D₀) der wendelförmigen Struktur des Federdrahts zwischen 1,0 und 4,0 mm beträgt, vorzugsweise zwischen 1,4 und 2,3 mm.

7. Vorrichtung nach einem der Ansprüche 1 bis 6, **dadurch gekennzeichnet, dass** das Federelement (5, 7) aus einem sich gerade erstreckenden wendelförmig gebogenen Federdraht gebildet wird, wobei die beiden axialen Enden (8, 9) des wendelförmig gebogenen Federdrahts miteinander verbunden sind.

8. Vorrichtung nach Anspruch 7, **dadurch gekennzeichnet, dass** der sich gerade erstreckende wendelförmig gebogene Federdraht an seinem einen axialen Ende (8) einen Abschnitt (10) aufweist, in dem der Außendurchmesser der wendelförmigen Struktur (D₀) des Federdrahts einen gegenüber dem restlichen Bereich der wendelförmigen Struktur des Federdrahts reduzierten Durchmesser (D₁) aufweist.

9. Vorrichtung nach Anspruch 8, **dadurch gekennzeichnet, dass** der Abschnitt (8) mit reduziertem Durchmesser (D₁) in das andere axiale Ende (9) des wendelförmig gebogenen Federdrahts eingeschraubt ist.

10. Vorrichtung nach einem der Ansprüche 1 bis 9, **dadurch gekennzeichnet, dass** der Dichtungsbalg (3) aus Gummi besteht.

11. Vorrichtung nach einem der Ansprüche 1 bis 9, **dadurch gekennzeichnet, dass** der Dichtungsbalg (3) aus Kunststoff besteht, insbesondere aus einem Thermoplastischen Elastomer auf Urethanbasis (TPU).
